(19) Europäisches Patentamt
European Patent Office
Office européen des brevets

(11) EP 0 457 918 B1

(12) **EUROPEAN PATENT SPECIFICATION**

(45) Date of publication and mention
of the grant of the patent:
**19.03.1997 Bulletin 1997/12**

(21) Application number: **91900326.9**

(22) Date of filing: **12.12.1990**

(51) Int Cl.6: **C08L 67/02**, C08K 7/14

(86) International application number:
**PCT/JP90/01624**

(87) International publication number:
**WO 91/09086 (27.06.1991 Gazette 1991/14)**

(54) **VIBRATION DAMPING POLYALKYLENE TEREPHTHALATE RESIN COMPOSITION AND MOLDED ARTICLE THEREOF**

SCHWINGUNGSDÄMPFENDE POLYALKYLENTEREPHTHALATHARZZUSAMMENSETZUNG UND FORMKÖRPER DARAUS

PREPARATION AMORTISSEUSE DE VIBRATIONS A BASE DE RESINE DE TEREPHTALATE DE POLYALKYLENE ET ARTICLE MOULE FABRIQUE A PARTIR D'UNE TELLE PREPARATION

(84) Designated Contracting States:
**AT BE CH DE DK ES FR GB GR IT LI LU NL SE**

(30) Priority: **13.12.1989 JP 323392/89**

(43) Date of publication of application:
**27.11.1991 Bulletin 1991/48**

(73) Proprietor: **POLYPLASTICS CO., LTD.
Osaka-shi, Osaka 541 (JP)**

(72) Inventors:
• **ENDO, Toshihiko
Fuji-shi, Shizuoka 416 (JP)**

• **TAKAYAMA, Katsunori
Fuji-shi, Shizuoka 416 (JP)**

(74) Representative: **W.P. THOMPSON & CO.
Eastcheap House
Central Approach
Letchworth, Hertfordshire SG6 3DS (GB)**

(56) References cited:
**JP-A- 0 596 250         JP-A- 0 614 758
JP-A- 5 417 956         JP-A-58 167 643**

**Description**

The present invention relates to a vibration-deadening polyalkylene terephthalate resin composition which is excellent in vibration-damping properties and exhibits high stiffness, and a vibration-deadening part produced by molding the same.

Recently, attention has been paid to counter-measures to sources of vibration of various kinds of apparatus, so that a vibration-deadening material has been necessitated. Particularly, with respect to mechanical parts of audio visual systems (AV) such as a compact disc (CD) systems, parts of speakers and body parts in the engine space of an automobile, it is desired in many cases that vibration neither continue nor propagate.

Up to this time, a vibration-deadening composite metal board has been often used for the deadening of vibration. The composite metal board is characterized by comprising an elastic polymer layer between metal sheets as an interlayer to thereby absorb and damp vibration. It is used to enclose a source of vibration such as an engine or a motor. However, the fabrication of the composite metal board is troublesome and the application thereof to parts having complicated shapes is very difficult.

It is preferable from such a viewpoint that these parts be made of a thermoplastic resin which can be efficiently injection-molded into a complicated shape. However, no functional resin excellent both in vibration-deadening properties and in other general physical properties has been developed as yet, so that there are now being made contrivances such as the use of a material having high stiffness or a high specific gravity and the modification of the dimensions for offsetting the defects of the material used.

Under these circumstances, it has quite useful in respect of practicality to impart a vibration-deadening function to a polyalkylene terephthalate resin which exhibits excellent general physical properties, particularly when injection-molded into a part. For example, a polybutylene terephthalate resin (PBT) is excellent in mechanical and electrical properties and other physical and chemical properties, can be remarkably improved in mechanical properties by the addition of a glass or carbon fiber and exhibits excellent processability, so that it has been used as an engineering plastic in a wide field including automotive parts and electrical and electronic components. However, PBT is poor in vibration-deadening properties by itself. Further, even when an inorganic filler such as a reinforcing fiber is added to PBT, the vibration absorption (vibration-damping properties) of the resulting composition is still insufficient, though it is expected that the composition may be somewhat improved in stiffness.

As described above, polyalkylene terephthalate is excellent in various characteristics and moldability, so that the development of a vibration deadening material based thereon and having excellent vibration-damping properties is strongly expected.

Under these circumstances, the inventors of the present invention have intensively studied how to impart a vibration-deadening function to a polyalkylene terephthalate resin and have found that a high-stiffness material excellent in vibration-damping properties can be obtained by blending a polyalkylene terephthalate resin as a main component with a specific polymer and a specific glass fiber. The present invention has been accomplished on the basis of this finding.

Namely, the present invention provides a vibration-deadening polyalkylene terephthalate resin composition which comprises a resin mixture comprising

(A) 60 to 97% by weight of a polyalkylene terephthalate resin which does not form an anisotropic molten phase,
(B) 40 to 3% by weight of at least one polymer selected from liquid-crystal polyester resins, homopolymers of acrylic acid or an ester thereof, homopolymers of methacrylic acid or an ester thereof, and random or block copolymers of acrylic acid or methacrylic acid or an ester of either thereof with styrene, acrylonitrite, butadiene or isoprene, and
(C) 5 to 60 parts by weight of a glass fiber having a flat section perpendicular to the lengthwise direction of the fiber wherein the ratio of the major axis (the length of the longest straight line of the section) to the minor axis (the length of the straight line perpendicular to the major axis) lies between 1.5 and 5,

and a vibration-deadening part molded therefrom.

The components constituting the vibration-polyalkylene terephthalate resin according to the present invention will now be described in more detail.

First, the polyalkylene terephthalate resin (A) may be a polyester prepared by the polycondensation of an alkylene glycol such as ethylene glycol, propylene glycol, butanediol or neopentyl glycol with terephthalic acid or an ester thereof with a lower alcohol according to a conventional process or a copolymer prepared by the polycondensation among the above two components and a third component copolymerizable therewith.

Examples of the third component include isophthalic, methylisophthalic, methylterephthalic, diphenyldicarboxylic and naphthalenedicarboxylic acids and polyoxyalkylene glycols, which may be used alone or as a mixture of two or more of them.

Although all of the polyalkylene terephthalate resins prepared by the polycondensation of the monomer components described above can be used as the component (A) in the present invention either alone or as a mixture of two or more of them, polybutylene terephthalate and copolymers containing at least 70% by weight of polybutylene terephthalate are preferably used. Further, a mixture of polybutylene terephthalate or a copolymer thereof with polyethylene terephthalate or a copolymer thereof is preferably used as the component (A).

The liquid-crystal polyester which may be used as the component (B) is a polyester which is melt-processable in itself and has a property that the molecular chains thereof are arranged in regular parallel in a molten state. Such an arranged state of molecules is often called "liquid-crystal state" or "nematic phase of a liquid-crystal substance". The molecule of a liquid-crystal polymer is generally slender and flat, exhibits relatively high stiffness along the major axis thereof and generally contains a plurality of chain-lengthening bonds which are present either coaxially or in parallel.

The presence of an anisotropic molten phase can be ascertained by a conventional test with polarized light using crossed nicols. Precisely, a molten sample put on a Leitz hot stage is observed with the crossed nicols in a nitrogen atmosphere by the use of a Leitz polarization microscope (40 x magnification). When the polyester to be used in the present invention is tested according to this method between the crossed nicols, polarized light should be transmitted through the nicols even when the polyester is in a static molten state. That is, the polyester should form an optically anisotropic molten phase.

The anisotropic molten phase-forming polymer which may be used as the component (B) in the present invention is preferably an aromatic polyester, an aromatic polyesteramide or a polyester partially containing an aromatic polyester and an aromatic polyesteramide in one molecular chain.

Particularly, liquid-crystal aromatic polyesters and liquid-crystal aromatic polyesteramides each containing at least one compound selected from the group consisting of aromatic hydroxycarboxylic acids, aromatic dicarboxylic acids, aromatic diols, aromatic hydroxyamines and aromatic diamines as the constituent monomer are more preferred.

Particular examples thereof include

1) polyesters each mainly constituted of one or more members selected from among aromatic hydroxycarboxylic acids and derivatives,

2) polyesters each mainly constituted of

a) one or more members selected from among hydroxycarboxylic acids and derivatives thereof,

b) one or more members selected from among aromatic dicarboxylic acids, alicyclic dicarboxylic acids and derivatives thereof and

c) one or more members selected from among aromatic diols, alicyclic diols, aliphatic diols and derivatives thereof,

3) polyesteramines each mainly constituted of

a) one or more members selected from among aromatic hydroxycarboxylic acids and derivatives thereof,

b) one or more members selected from among aromatic hydroxyamines, aromatic diamines and derivatives thereof and

c) one or more members selected from among aromatic dicarboxylic acids, alicyclic dicarboxylic acids and derivatives thereof

and

4) polyesteramides each mainly constituted of

a) one or more members selected from among aromatic hydroxycarboxylic acids and derivatives thereof,

b) one or more members selected from among aromatic hydroxyamines, aromatic diamines and derivatives thereof,

c) one or more members selected from among aromatic dicarboxylic acids, alicyclic dicarboxylic acids and derivatives thereof and

d) one or more members selected from among aromatic diols, alicyclic diols, aliphatic diols and derivatives thereof.

Preferred particular examples of the compound constituting the liquid-crystal polyester to be used in the present invention include p-substituted benzene derivatives such as p-hydroxybenzoic acid, terephthalic acid, hydroquinone, p-aminophenol and p-phenylenediamine and ring-substituted derivatives thereof (wherein the substituent is selected from among chlorine, bromine, methyl, phenyl and 1-phenylethyl); m-substituted benzene derivatives such as isophthalic acid and resorcinol; naphthalene derivatives such as 2,6-naphthalenedicarboxylic acid, 2,6-dihydroxynaphthalene, 1,4-dihydroxynaphthalene and 6-hydroxy-2-naphthoic acid; and biphenyl compounds such as 4,4'-diphenyldicarboxylic acid and 4,4'-dihydroxybiphenyl.

The liquid-crystal polyester to be used in the present invention may partially contain polyalkylene terephthalate not forming any anisotropic molten phase in addition to the polyalkylene terephthalate constituted of the monomers described above in one molecular chain. The alkylene group of the former polyalkylene terephthalate has 2 to 4 carbon atoms.

Among the liquid-crystal polyesters described above, polyesters each containing one or more members selected from among p-substituted benzene derivatives, naphthalene derivatives and biphenyl compounds are more preferable. Further, among the p-substituted benzene derivatives listed above, p-hydroxybenzoic acid, methylhydroquinone and 1-phenylethylhydroquinone are particularly preferable.

Particular examples of the compound having an ester-forming functional group which can constitute the polyester to be used in the present invention and those of the anisotropic molten phase-forming polyester to be preferably used therein are described in Japanese Patent Publication No. 36633/1988.

The liquid-crystal polyester to be favorably used in the present invention generally has a weight-average molecular weight of about 2,000 to 200,000, preferably about 10,000 to 50,000, while the aromatic polyesteramide to be favorably used generally has a molecular weight of about 5,000 to 50,000, preferably about 10,000 to 30,000, still preferably 15,000 to 17,000.

The component (B) may alternatively be a homopolymer of acrylic acid or its ester (such as methyl acrylate, ethyl acrylate, n-propyl acrylate, isopropyl acrylate, n-butyl acrylate, n-hexyl acrylate or n-octyl acrylate), a homopolymer of methacrylic acid or its ester (such as methyl methacrylate, ethyl methacrylate, n-propyl methacrylate, isopropyl methacrylate, n-butyl methacrylate, isobutyl methacrylate, n-amyl methacrylate or n-octyl methacrylate) or a copolymer of the (meth)acrylic monomer as described above with styrene, acrylonitrile, butadiene or isoprene. These copolymers may be each either random or block. Among these homopolymers and copolymers, methacrylate homopolymers and copolymers are preferable, among which methyl methacrylate homopolymer and copolymers comprising methyl methacrylate as the main component and other comonomer are more preferable, the comonomer including acrylates, methacrylates other than methyl methacrylate, acrylic acid, methacrylic acid, styrene and acrylonitrile.

According to the present invention, the polyalkylene terephthalate (A) described above is blended with at least one polymer (B) selected from among liquid-crystal polyesters and acrylic resins at such a ratio that the content of the component (A) in the resin mixture be 60 to 97% by weight, preferably 70 to 90% by weight and that of the component (B) therein be 40 to 3% by weight preferably 30 to 10% by weight.

When the content of the component (B) in the resin mixture is less than 3% by weight, the vibration-damping properties will not be improved effectively, while when it exceeds 40% by weight, the resulting resin mixture will lose the characteristics inherent in the polyalkylene terephthalate and the use of such a large amount of the component (B) is uneconomical.

As described above, the vibration-damping properties of the polyalkylene terephthalate (A) is improved by the addition of a specific polymer (B), which is presumably because the stiffness of the component (B) is higher than that of the component (A) and the dispersion structure of the component (A) may fit with that of the component (B). Generally, a completely compatible system does not give any improvement in the damping properties, while a completely incompatible system causes undesired troubles such as delamination.

According to the present invention, a particular glass fiber (C) having a flat section is added to the above resin mixture.

The glass fiber (C) to be used in the present invention does not have a circular section but a flat section.

While the addition of a circular glass fiber according to the prior art is hardly effective in improving the vibration-damping properties of the resin mixture of the present invention which is an object of the present invention, it has been now surprisingly found that the addition of a glass fiber having a flat section can remarkably improve the vibration-damping properties thereof without damaging the mechanical properties inherent in the polyalkylene terephthalate resin.

The glass fiber (C) having a flat section to be used for this purpose is one having a section perpendicular to its lengthwise direction wherein the ratio of the major axis (the length of the longest strength line of the section) to the minor axis (the length of the longest straight line perpendicular to the major axis) lies between 1.5 to 5. Particular examples of the form of the section include cocoon, oval ellipse, half circle, arc, rectangle and forms similar thereto, among which cocoon, oval and ellipse are particularly preferable.

When the ratio of the major axis to the minor axis is less than 1.5, the glass fiber is less effective, while when it exceeds 5, such a glass fiber is difficult to prepare.

As the sectional area of the glass fiber (C) increases, the vibration-deadening effect lowers. On the contrary, a glass fiber having too small a sectional area is difficult to prepare and is problematic in its handling. Accordingly, the sectional area of the glass fiber to be used in the present invention is preferably $2 \times 10^{-5}$ to $8 \times 10^{-3} mm^2$, more preferably $8 \times 10^{-5}$ to $8 \times 10^{-3} mm^2$.

Although the length of the glass fiber (C) may be arbitrary, it is preferable in respect of the mechanical strengths of a molded article that the fiber contained in the article be as long as possible. The length of the fiber may be suitably selected in a range exceeding 30μm depending upon the required performances. Generally, it is 50 to 1000μm.

It is preferable from the standpoint of handleability and adhesion to the resin that the glass fiber (C) be treated with a sizing agent or a surface treatment. The sizing agent and surface treatment may be each any known one selected from among epoxy, isocyanate, silane and titanate compounds and so on. The glass fiber may be used in a state previously treated with such a compound or may be added together with the compound in the course of the preparation of the composition.

The glass fiber (C) having a flat section according to the present invention can be prepared by, for example spinning a molten glass through a nozzle having a suitable bore form selected from among oval, ellipse, rectangle, slit and so on as a bushing for ejecting the molten glass. Alternatively, it can also be prepared by spinning a molten glass through a plurality of nozzles having various sections (including circular one) and provided in close vicinity to each other and combining the spun glasses with each other to form a single filament.

The amount of the glass fiber (C) to be added is 5 to 60% by weight, preferably 10 to 50% by weight (based on the total amount of the composition). When the amount is less than 5% by weight, no desired effect will be attained, while when it exceeds 60% by weight, the molding and processing of the resulting composition will be difficult. The amount of the functional surface treatment to be simultaneously used is 0 to 10% by weight, preferably 0.05 to 5% by weight based on the glass fiber (C).

A molded article made of the polyalkylene terephthalate resin composition comprising the components (A), (B) and (C) not only exhibits high stiffness which is the main vibration-deadening means according to the prior art, but also is excellent in vibration-damping properties (vibration absorption) to thereby attain an excellent vibration-deadening function which cannot be attained by the glass fiber-reinforced polyester resin of the prior art.

Although the resin composition of the present invention exhibits excellent performance even as such, it may further contain a small amount of a thermoplastic resin other than the polymer (B), a fibrous inorganic filler other than the fiber (C) or a powdery, granular or flaky inorganic filler as an auxiliary component so far as the object of the present invention is not hindered.

Further, the resin composition of the present invention may contain known additives which are conventionally added to a thermoplastic or thermosetting resin for the purpose of imparting the characteristics required depending upon the object and examples of the additives include stabilizers such as antioxidants, heat stabilizers and ultraviolet absorbers; antistatic agents, lubricants, mold release agents, colorants such as dyes and pigments; lubricating oils, plasticizers, crystallization accelerators and nucleating agents.

The resin composition of the present invention can be easily prepared by a process which has been conventionally employed for the preparation of the filler-reinforced resin composition according to the prior art. That is, the glass fiber may be a roving or chopped strand prepared by bundling and, if necessary, cutting to a suitable size or a filament and can be used according to a conventional method. For example, the composition can be prepared by a process which comprises mixing the necessary components together, kneading and extruding the obtained mixture with an extruder to obtain a pellet and molding the pellet, a process which comprises preparing a pellet (master batch) having a composition different from the objective one, diluting the pellet into a predetermined concentration and molding the obtained composition to obtain a molded article having an objective composition or a process which comprises directly feeding necessary components into a molding machine.

The molding process may be any one selected from among those which are generally known as molding processes for thermoplastic resins, depending upon the shape and structure of the objective article, with injection molding being the best.

As described above, a molded article made of the polyalkylene terephthalate resin composition containing a specific polymer and a glass fiber having a specific section according to the present invention is remarkably improved in vibration-damping properties and is not inferior to the glass fiber-reinforced polyester resin of the prior art in mechanical properties such as strengths and stiffness, thus exhibiting an excellent vibration-deadening effect.

Accordingly, the composition of the present invention is very useful as a structural part of an automobile having a source of vibration, such as an engine or a motor, for example, interior or fender mirrors, or a direct structural part of an audio visual system or an office automation appliance.

Brief Description of the Drawing:

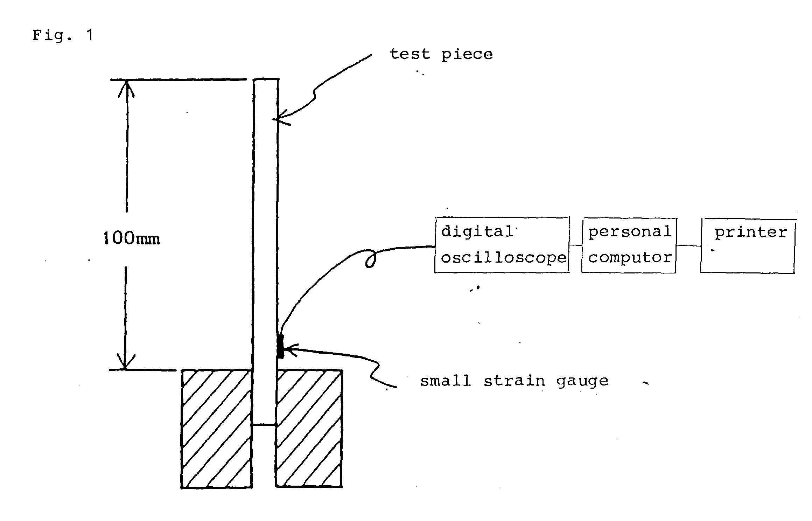

Fig. 1 is a view illustrating the determination of a vibration damping factor in Examples.

Examples of the present invention will now be given, though the present invention is not limited by them. The evaluation methods employed therein are as follows:

①determination of vibration damping factor:

A test piece having a width of about 13mm, a length of about 130mm and a thickness of about 3mm was prepared by molding and set as shown in Fig. 1. Free vibration was applied to one end of the test piece to determine the variation of output voltage with time (damping curve) with a digital oscilloscope. On the basis of the curve, the logarithmic decrement per unit time (sec) was calculated according to the following equation:

logarithmic decrement per unit time (sec) ($\lambda$)

$$= -\frac{1}{T} \log \frac{X_{n+1}}{X_n}$$

T :      period (sec)
$X_n$ :     vibration amplitude at some time
$X_{n+1}$:    vibration amplitude after one period from the time $X_n$

②flexural modulus:

determined according to ASTM D 790.

Examples 1 to 5

A mixture comprising polybutylene terephthalate as the component (A), one of various liquid-crystal polyesters which will be described as the component (B) and a sized chopped glass strand having a cocoon-like section of a major axis to minor axis ratio of 2.3 and having a length of 3mm as the component (C) was pelletized with an extruder.
The pellet was injection-molded into a test piece, which was used in the evaluation. The results are given in Table 1.

Examples 6 to 10

A mixture comprising the same polybutylene terephthalate as that used in Example 1 as the component (A) an acrylic resin (methyl methacrylate resin) as the component (B) and the same chopped glass strand as that used in Example 1 as the component (C) was pelletized and evaluated in a similar manner to that of Example 1. The results are given in Table 1.

Comparative Examples 1 to 12

A mixture characterized by being dificient in the component (B), another mixture prepared by adding only a 3mm long copped glass strand having a circular section which is outside the scope of the present invention to polybutylene terephthalate and still other mixtures each prepared by adding both the same chopped glass strand as the one used above and the component (B) to polybutylene terephthalate were each pelletized and evaluated in a similar manner to that of the foregoing Examples. The formulations of the mixtures and the results of the evaluation are together given in Table 2.

Comparative Example 13

A mixture comprising polybutylene terephthalate (A), polycarbonate and the same chopped glass strand (C) as that used in Example 1 was pelletized and evaluated in a similar manner to that of the foregoing Examples. The results are given in Table 2.

Example 11 and Comparative Example 14

A pellet was prepared in the same manner as that of Example 3 except that a polymer mixture comprising polybutylene terephthalate and a modified polyethylene terephthalate was ueed instead of the polybutylene terephthalate and evaluated in a similar manner to that of the foregoing Examples. For comparison, a pellet was prepared in the same manner as that described above except that a glass fiber having a circular section was used instead of the chopped glass strand and evaluated. The results are given in Tables 1 and 2, respectively.

Example 12

A mixture comprising the same polybutylene terephthalate as that used in Example 7 as the component (A), an acrylic resin as the component (B) and a 3mm long chopped glass strand having an ellptic section having a major axis to minor axis ratio of about 1.8 was pelletized and evaluated in a similar manner to that of Example 7. The results are given in Table 1.

Table 1

| Composition | | Unit | 1 | 2 | 3 | 4 | 5 | 6 | 7 | 8 | 9 | 10 | 11 | 12 |
|---|---|---|---|---|---|---|---|---|---|---|---|---|---|---|
| (A) | polybutylene terephthalate *1 | % by wt. | 80 | 60 | 40 | 80 | 80 | 80 | 60 | 70 | 60 | 80 | 25 | 60 |
| | polyethylene terephthalate *1 | " | | | | | | | | | | | 15 | |
| (B) liquid-crystal polyester resin *2 | B-1 | " | 10 | 10 | 10 | | | | | | | | 10 | |
| | B-2 | " | | | | 10 | | | | | | | | |
| | B-3 | " | | | | | 10 | | | | | | | |
| (B) acrylic resin *3 | B-4 | " | | | | | | 10 | 10 | 20 | 30 | | | |
| | B-5 | " | | | | | | | | | | 10 | | |
| (B') | polycarbonate | | | | | | | | | | | | | |
| (C) | glass fiber having a flat section *4 | " | 10 | 30 | 50 | 10 | 10 | 10 | 30 | 10 | 10 | 10 | 50 | 30 |
| (C') | glass fiber having a circular section | " | | | | | | | | | | | | |
| Qualities | logarithmic decrement | - | 2.2 | 2.8 | 3.2 | 2.1 | 2.1 | 1.8 | 2.5 | 3.3 | 3.9 | 1.9 | 4.1 | 2.4 |
| | flexural modulus | kg/cm² | 48000 | 100000 | 152000 | 47000 | 47000 | 45000 | 98000 | 46000 | 47000 | 45000 | 152000 | 99000 |

Example No.

8

Table 2

| Composition | | | Unit | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|---|
| | | | | | | | | | Comp. Ex. No. | | | | | | | | |
| Composition | (A) | polybutylene terephthalate | % by wt. | 90 | 90 | 80 | 60 | 40 | 80 | 80 | 80 | 60 | 70 | 60 | 80 | 80 | 25 |
| | | polyethylene terephthalate *1 | " | | | | | | | | | | | | | | 15 |
| | (B) | liquid-crystal polyester resin *2 B-1 | " | | | 10 | 10 | 10 | | | | | | | | | 10 |
| | | B-2 | " | | | | | | 10 | | | | | | | | |
| | | B-3 | " | | | | | | | 10 | | | | | | | |
| | | acrylic resin *3 B-4 | " | | | | | | | | | 10 | 10 | 20 | 30 | | |
| | | B-5 | " | | | | | | | | | | | | 10 | | |
| | (B') | polycarbonate | " | | | | | | | | | | | | | 10 | |
| | (C) | glass fiber having a flat section *4 | " | 10 | | | | | | | | | | | | 10 | |
| | (C') | glass fiber having a circular section | " | | 10 | 10 | 30 | 50 | 10 | 10 | 10 | 30 | 10 | 10 | 10 | | 50 |
| Qualities | | logarithmic decrement | - | 1.3 | 0.91 | 1.6 | 1.8 | 2.0 | 1.5 | 1.5 | 1.3 | 1.4 | 2.3 | 2.7 | 1.3 | 1.3 | 2.3 |
| | | flexural modulus | kg/cm$^2$ | 43000 | 42000 | 46000 | 96000 | 147000 | 45000 | 45000 | 43000 | 94000 | 44000 | 45000 | 43000 | 42000 | 146000 |

EP 0 457 918 B1

(Note)

*1: isophthalic acid-modified polyethylene

terephthalate prepared by the polycondensation

among terephthalic acid, isophthalic acid and

ethylene glycol

*2: the liquid-crystal polyester resins used in

the foregoing Examples are each composed of

the following constituent units:

B-1;

$$= 7 0 / 3 0$$

B-2;

$$= 7 0 / 2 0 / 1 0$$

B-3;

$$= 8 0 / 1 9 / 1$$

```
*3: B-4: methyl methacrylate resin (M.W.: 50,000)

    B-5: methyl methacrylate resin (M.W.: 200,000)

*4: major axis/minor axis ratio

    about 2.3 in Examples 1 to 11 and Comparative

    Examples 1 and 13 and about 1.8 in Example 12
```

## Claims

1. A vibration-deadening polyalkylene terephthalate resin composition which comprises 100 parts by weight of a resin mixture comprising

   (A) 60 to 97% by weight of a polyalkylene terephthalate resin which does not form an anisotropic molten phase,
   (B) 40 to 3% by weight of at least one polymer selected from liquid-crystal polyester resins, homopolymers of acrylic acid or an ester thereof, homopolymers of methacrylic acid or an ester thereof, and random or block copolymers of acrylic acid or methacrylic acid or an ester of either thereof with styrene, acrylonitrile, butadiene or isoprene, and
   (C) 5 to 60 parts by weight of a glass fiber having a flat section perpendicular to the lengthwise direction of the fiber wherein the ratio of the major axis (the length of the longest straight line of the section) to the minor axis (the length of the straight line perpendicular to the major axis) lies between 1.5 and 5.

2. A vibration-deadening polyalkylene terephthalate resin composition according to claim 1, wherein component (B) is a homopolymer or copolymer of a methacrylic ester.

3. A vibration-deadening polyalkylene terephthalate resin composition according to claim 1 or 2, wherein component (B) is a liquid-crystal aromatic polyester or polyesteramide containing at least one compound selected from aromatic hydroxycarboxylic acids, aromatic dicarboxylic acids, aromatic diols, aromatic hydroxyamines and aromatic diamines as a constituent

4. A vibration-deadening polyalkylene terephthalate resin composition according to any of claims 1 to 3, wherein component (C) mainly comprises glass fibre having a section which is a cocoon, an oval, an ellipse, a half circle, an arc or a rectangle.

5. A vibration-deadening polyalkylene terephthalate resin composition according to any of claims 1 to 4, wherein component (A) is polybutylene terephthalate or a copolymer containing at least 70% by weight of polybutylene terephthalate.

6. A vibration-deadening polyalkylene terephthalate resin composition according to any of claims 1 to 4, wherein component (A) is a mixture of polybutylene terephthalate or a copolymer thereof with polyethylene terephthalate or a copolymer thereof.

7. A vibration-deadening part produced by molding a polyalkylene terephthalate resin composition according to any of claims 1 to 6.

## Patentansprüche

1. Schwingungsdämpfende Polyalkylenterephthalat-Harzzusammensetzung, die 100 Gew.Teile einer Harzmischung aus

(A) 60 bis 97 Gew.% eines Polyalkylenterephthalat-Harzes, das keine anisotrope Schmelzphase bildet,

(B) 40 bis 3 Gew.% mindestens eines Polymer, ausgewählt aus Flüssigkristall-Polyesterharzen, Homopolymeren von Acrylsäure oder einem Ester davon, Homopolymeren von Methacrylsäure oder einem Ester davon und aus statistischen oder Block-Copolymeren von Acryl- oder Methacrylsäure oder einem Ester von einer jeden der beiden mit Styrol, Acrylnitril, Butadien oder Isopren, sowie

(C) 5 bis 60 Gew. Teile einer Glasfaser enthält, die senkrecht zur Längsrichtung der Faser einen flachen Abschnitt aufweist, worin das Verhältnis der größeren Achse (die Länge der längsten Geraden des Abschnitts) zur kleineren Achse (die Länge der Geraden senkrecht zur größeren Achse) 1,5 bis 5 beträgt.

2. Schwingungsdämpfende Polyalkylenterephthalat-Harzzusammensetzung gemäß Anspruch 1, worin Komponente (B) ein Homopolymer oder Copolymer eines Methacrylsäureesters ist.

3. Schwingungsdämpfende Polyalkylenterephthalat-Harzzusammensetzung gemäß Anspruch 1 oder 2, worin Komponente (B) ein flüssigkristalliner aromatischer Polyester oder ein flüssigkristallines aromatisches Polyesteramid ist, welche als einen Bestandteil mindestens eine Verbindung enthalten, ausgewählt aus aromatischen Hydroxycarboxylsäuren, aromatischen Dicarboxylsäuren, aromatischen Diolen, aromatischen Hydroxyaminen und aus aromatischen Diaminen.

4. Schwingungsdämpfende Polyalkylenterephthalat-Harzzusammensetzung gemäß jedem der Ansprüche 1 bis 3, worin Komponente (C) hauptsächlich Glasfasern umfaßt, die einen Abschnitt aufweisen, welcher ein Kokon, ein Oval, eine Ellipse, ein Halbkreis, ein Bogen oder ein Rechteck ist.

5. Schwingungsdämpfende Polyalkylenterephthalat-Harzzusammensetzung gemäß jedem der Ansprüche 1 bis 4, worin Komponente (A) Polybutylenterephthalat oder ein Copolymer ist, das mindestens 70 Gew.% Polybutylenterephthalat enthält.

6. Schwingungsdämpfende Polyalkylenterephthalat-Harzzusammensetzung gemäß jedem der Ansprüche 1 bis 4, worin Komponente (A) eine Mischung aus Polybutylenterephthalat oder einem Copolymer davon mit Polyethylenterephthalat oder einem Copolymer davon ist.

7. Schwingungsdämpfendes Teil, erhältlich durch Formung einer Polyalkylenterephthalat-Harzzusammensetzung gemäß jedem der Ansprüche 1 bis 6.


## Revendications

1. Une composition à base de résine de polytéréphtalate d'alkylène amortissant les vibrations, qui comprend 100 parties en poids d'un mélange de résines constitué de

(A) 60 à 97 % en poids d'une résine de polytéréphtalate d'alkylène qui ne forme pas de phase fondue anisotrope,
(B) 40 à 3 % en poids d'au moins un polymère choisi parmi les résines polyesters à cristal liquide, les homopolymères de l'acide acrylique ou d'un ester de celui-ci, les homopolymères de l'acide méthacrylique ou d'un ester de celui-ci, et les copolymères statistiques ou séquencés de l'acide acrylique ou de l'acide méthacrylique ou d'un ester de l'un ou l'autre de ceux-ci avec le styrène, l'acrylonitrile, le butadiène ou l'isoprène, et
(C) 5 à 60 parties en poids d'une fibre de verre ayant une section plane, perpendiculaire à la direction longitudinale de la fibre, dans laquelle le rapport du grand axe (la longueur de la ligne droite la plus longue de la section) au petit axe (la longueur de la ligne droite perpendiculaire au grand axe) se situe entre 1,5 et 5.

2. Une composition à base de résine de polytéréphtalate d'alkylène amortissant les vibrations selon la revendication 1, dans laquelle le composant (B) est un homopolymère ou copolymère d'un ester méthacrylique.

3. Une composition à base de résine de polytéréphtalate d'alkylène amortissant les vibrations selon la revendication ou 2, dans laquelle le composant (B) est un polyester ou polyesteramide aromatique à cristal liquide contenant, comme constituant, au moins un composé choisi parmi les hydroxy-acides carboxyliques aromatiques, les acides dicarboxyliques aromatiques, les diols aromatiques, les hydroxy-amines aromatiques et les diamines aromatiques.

4. Une composition à base de résine de polytéréphtalate d'alkylène amortissant les vibrations selon l'une quelconque des revendications 1 à 3, dans laquelle le composant (C) comprend principalement une fibre de verre dont la section a une forme de cocon, ovale, ellipse, demi-cercle, arc ou rectangle.

5. Une composition à base de résine de polytéréphtalate d'alkylène amortissant les vibrations selon l'une quelconque des revendications 1 à 4, dans laquelle le composant (A) est le polytéréphtalate de butylène ou un copolymère contenant au moins 70 % en poids de polytéréphtalate de butylène.

6. Une composition à base de résine de polytéréphtalate d'alkylène amortissant les vibrations selon l'une quelconque des revendications 1 à 4, dans laquelle le composant (A) est un mélange de polytéréphtalate de butylène ou d'un copolymère de celui-ci avec du polytéréphtalate d'éthylène ou un copolymère de celui-ci.

7. Un élément amortissant les vibrations produit par moulage d'une composition à base de résine de polytéréphtalate d'alkylène selon l'une quelconque des revendications 1 à 6.

EP 0 457 918 B1

Fig. 1

test piece

100mm

digital oscilloscope

personal computor

printer

small strain gauge